(19) Europäisches Patentamt
European Patent Office
Office européen des brevets

(11) EP 1 174 473 A2

(12) **EUROPÄISCHE PATENTANMELDUNG**

(43) Veröffentlichungstag:
**23.01.2002 Patentblatt 2002/04**

(51) Int Cl.[7]: **C09B 67/22**

(21) Anmeldenummer: **01115789.8**

(22) Anmeldetag: **11.07.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **21.07.2000 DE 10035494**

(71) Anmelder: **BAYER AG**
**51368 Leverkusen (DE)**

(72) Erfinder:
- **Linke, Frank**
  **51069 Köln (DE)**
- **Faubion, Kent**
  **Charleston, SC 29401 (US)**
- **Herrmann, Udo, Dr.**
  **41541 Dormagen (DE)**
- **Göbel, Ronald**
  **51371 Leverkusen (DE)**

(54) **Pigmentpräparationen**

(57) Feste Pigmentpräparationen enthaltend als Pigment wenigstens einen Metallkomplex einer Azo-Verbindung, die in Form ihrer tautomeren Strukturen der Formel (I) entspricht

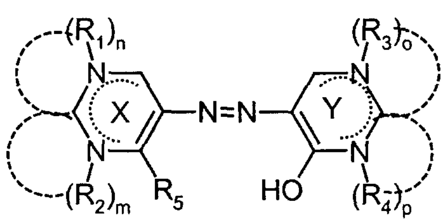

(I)

worin die mit

X und Y bezeichneten Ringe unabhängig voneinander je einen oder zwei Substituenten aus der Reihe =O, =S, $=NR_7$, $-NR_6H_7$, $-OR_6$, $-SR_6$, $-COOR_6$, -CN, $-CONR_6R_7$, $-SO_2R_8$,

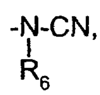

Alkyl, Cycloalkyl, Aryl und Aralkyl tragen können, wobei die Summe der endo- und exocyclischen Doppelbindungen für jeden der Ringe X und Y drei ist,

$R_6$ für Wasserstoff, Alkyl, Cycloalkyl, Aryl oder Aralkyl und

$R_7$ für Wasserstoff, Cyan, Alkyl, Cycloalkyl, Aryl, Aralkyl oder Acyl stehen und

$R_8$ Alkyl, Cycloalkyl, Aryl oder Aralkyl bezeichnet,

$R_1$, $R_2$, $R_3$, $R_4$ unabhängig voneinander für Wasserstoff, Alkyl, Cycloalkyl, Aryl oder Aralkyl stehen und weiter-

EP 1 174 473 A2

hin, wie in Formel (I) durch die unterbrochenen Linien angedeutet wird, 5- oder 6-gliedrige Ringe ausbilden können, an die weitere Ringe ankondensiert sein können,

$R_5$ -OH, $-NR_6R_7$, Alkyl, Cycloalkyl, Aryl oder Aralkyl bedeutet, wobei die für $R_1$ bis $R_8$ genannten CH-Bindungen enthaltenden Substituenten ihrerseits substituiert sein können und m, n, o, p 1 oder für den Fall, dass von den Ring-Stickstoffatomen Doppelbindungen ausgehen, wie in Formel (I) durch die punktierten Linien angedeutet wird, auch Null bedeuten können,

und der wenigstens eine andere Verbindung eingelagert enthält, dadurch gekennzeichnet, dass der Metallkomplex, der wenigstens eine andere Verbindung eingelagert enthält, wenigstens 30 ppm Fe, bezogen auf die Summe von Metallkomplex und eingelagerter Verbindung, enthält.

## Beschreibung

Die Erfindung betrifft neue Pigmentpräparationen, Verfahren zu ihrer Herstellung sowie ihre Verwendung.

Aus EP-A-73 463 und EP-A 994 164 sind bereits koloristisch wertvolle Pigmente bekannt. Die Anwendungsbreite der Pigmente ist jedoch eingeschränkt, da Änderungen der Eigenschaften nur durch aufwendige Nachbehandlungen wie das Tempern, Mahlen oder Beschichten zu erzielen sind.

Aufgabe der vorliegenden Erfindung war es daher, neue Pigmentformen bereitzustellen, die die oben beschriebenen Nachteile nicht mehr aufweisen.

Die Erfindung betrifft feste Pigmentpräparationen enthaltend als Pigment wenigstens einen Metallkomplex einer Azo-Verbindung, die in Form ihrer tautomeren Strukturen der Formel (I) entspricht

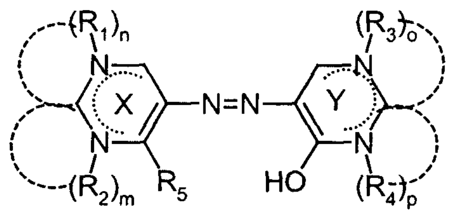

(I),

worin die mit

X und Y bezeichneten Ringe unabhängig voneinander je einen oder zwei Substituenten aus der Reihe =O, =S, $=NR_7$, $-NR_6H_7$, $-OR_6$, $-SR_6$, $-COOR_6$, -CN, $-CONR_6R_7$, $-SO_2R_8$,

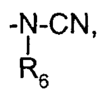

Alkyl, Cycloalkyl, Aryl und Aralkyl tragen können, wobei die Summe der endo- und exocyclischen Doppelbindungen für jeden der Ringe X und Y drei ist,

$R_6$ für Wasserstoff, Alkyl, Cycloalkyl, Aryl oder Aralkyl und

$R_7$ für Wasserstoff, Cyan, Alkyl, Cycloalkyl, Aryl, Aralkyl oder Acyl stehen und

$R_8$ Alkyl, Cycloalkyl, Aryl oder Aralkyl bezeichnet,

$R_1$, $R_2$, $R_3$, $R_4$ unabhängig voneinander für Wasserstoff, Alkyl, Cycloalkyl, Aryl oder Aralkyl stehen und weiterhin, wie in Formel (I) durch die unterbrochenen Linien angedeutet wird, 5- oder 6-gliedrige Ringe ausbilden können, an die weitere Ringe ankondensiert sein können,

$R_5$ -OH, $-NR_6R_7$, Alkyl, Cycloalkyl, Aryl oder Aralkyl bedeutet, wobei die für $R_1$ bis $R_8$ genannten CH-Bindungen enthaltenden Substituenten ihrerseits substituiert sein können und m, n, o, p 1 oder für den Fall, dass von den Ring-Stickstoffatomen Doppelbindungen ausgehen, wie in Formel (I) durch die punktierten Linien angedeutet wird, auch Null bedeuten können,

und der wenigstens eine andere Verbindung eingelagert enthält, dadurch gekennzeichnet, dass der Metallkomplex, der wenigstens eine andere Verbindung eingelagert enthält, wenigstens 30 ppm Fe, bezogen auf die Summe von Metallkomplex und eingelagerter Verbindung, enthält.

Bevorzugte organische Metallkomplexe sind dabei solche von Azo-Verbindungen, die in Form ihrer freien Säure einer der tautomeren Formen der Formel (I) entsprechen, bei denen der mit X gekennzeichnete Ring für einen

Ring der Formeln

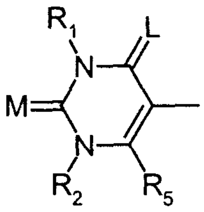 , 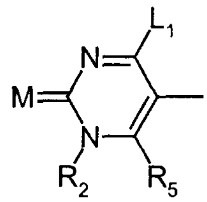 , 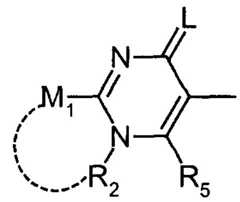 ,

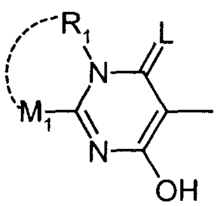 oder 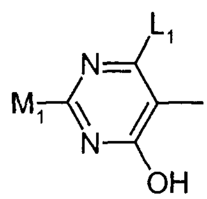 steht,

in denen

L und M unabhängig voneinander für =O, =S oder $=NR_6$ stehen

$L_1$ Wasserstoff, $-OR_6$, $-SR_6$, $-NR_6R_7$, $-COOR_6$, $-CONR_6R_7$, -CN, Alkyl, Cycloalkyl, Aryl oder Aralkyl und

$M_1$ $-OR_6$, $-SR_6$, $-NR_6R_7$, $-COOR_6$, $-CONR_6R_7$, -CN, $-SO_2R_8$

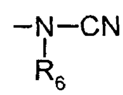 ,

Alkyl, Cycloalkyl, Aryl oder Aralkyl bezeichnen, wobei die Substituenten $M_1$ und $R_1$ oder $M_1$ und $R_2$ einen 5- oder 6-gliedrigen Ring ausbilden können.

Besonders bevorzugte organische Metallkomplexe sind dabei solche von Azo-Verbindungen, die in Form ihrer freien Säure einer ihrer tautomeren Strukturen der Formeln (II) oder (III) entsprechen

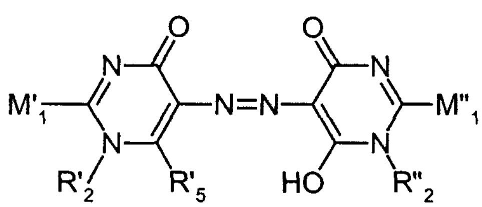 (II)

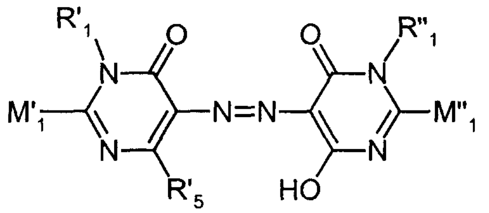

(III),

in denen

R'$_5$ -OH oder $-NH_2$ bezeichnet,

R'$_1$, R"$_1$, R'$_2$ und R"$_2$ jeweils für Wasserstoff steht und

M'$_1$ und M"$_1$ unabhängig voneinander für Wasserstoff, -OH, $-NH_2$, -NHCN, Arylamino oder Acylamino stehen.

Ganz besonders bevorzugte Metallkomplexe sind dabei solche von Azo-Verbindungen der Formel (I), die in Form ihrer freien Säure einer der tautomeren Strukturen der Formel (IV) entsprechen

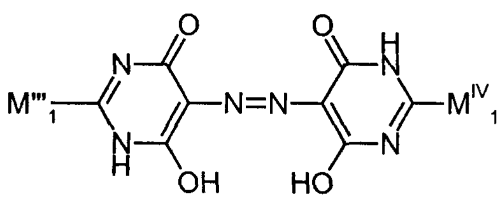

(IV),

in denen
M'''$_1$ und $M^{IV}_1$ unabhängig voneinander OH und NHCN bedeuten.
Bevorzugt vor allem sind dabei organische Metallkomplexe solcher Azo-Verbindungen der Formel (I), die in Form ihrer freien Säure einer der tautomeren Strukturen der Formel (V) entsprechen

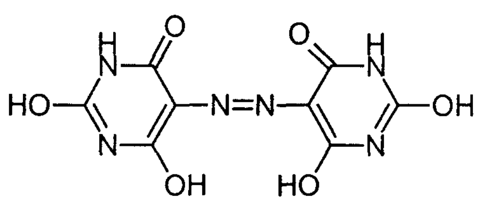

(V).

In den vorstehenden Formeln haben die Substituenten vorzugsweise die folgenden Bedeutungen:

Substituenten in der Bedeutung von Alkyl bezeichnen vorzugsweise $C_1$-$C_6$-Alkyl, das beispielsweise durch Halogen, wie Chlor, Brom oder Fluor, -OH, -CN, $-NH_2$ oder $C_1$-$C_6$-Alkoxy substituiert sein kann.

Substituenten in der Bedeutung von Cycloalkyl bezeichnen vorzugsweise $C_3$-$C_7$-Cycloalkyl, insbesondere $C_5$-$C_6$-Cycloalkyl, das beispielsweise durch $C_1$-$C_6$-Alkyl, $C_1$-$C_6$-Alkoxy, Halogen wie Cl, Br oder F, $C_1$-$C_6$-Alkoxy, -OH, -CN sowie $NH_2$ substituiert sein kann.

Substituenten in der Bedeutung von Aryl bezeichnen vorzugsweise Phenyl oder Naphthyl, die beispielsweise durch Halogen wie F, Cl oder Br, -OH, $C_1$-$C_6$-Alkyl, $C_1$-$C_6$-Alkoxy, $-NH_2$, $-NO_2$ sowie -CN sustituiert sein können.

Substituenten in der Bedeutung von Aralkyl bezeichnen bevorzugt Phenyl- oder Naphthyl-$C_1$-$C_4$-alkyl, die in den aromatischen Resten beispielsweise durch Halogen wie F, Cl oder Br, -OH, $C_1$-$C_6$-Alkyl, $C_1$-$C_6$-Alkoxy, -$NH_2$, -$NO_2$ sowie -CN substituiert sein können.

Substituenten in der Bedeutung von Acyl bezeichnen vorzugsweise ($C_1$-$C_6$-Alkyl)-carbonyl, Phenylcarbonyl, $C_1$-$C_6$-Alkylsulfonyl, Phenylsulfonyl, gegebenenfalls durch $C_1$-$C_6$-Alkyl, Phenyl und Naphthyl substituiertes Carbamoyl, gegebenenfalls durch $C_1$-$C_6$-Alkyl, Phenyl und Naphthyl substituiertes Sulfamoyl oder gegebenenfalls durch $C_1$-$C_6$-Alkyl, Phenyl und Naphthyl substituiertes Guanyl, wobei die genannten Alkylreste beispielsweise durch Halogen wie Cl, Br oder F, -OH, -CN, - $NH_2$ oder $C_1$-$C_6$-Alkoxy substituiert sein können und die genannten Phenyl- und Naphthylreste beispielsweise durch Halogen wie F, Cl oder Br, -OH, $C_1$-$C_6$-Alkyl, $C_1$-$C_6$-Alkoxy, -$NH_2$, -$NO_2$ und -CN substituiert sein können.

Für den Fall, dass $M_1R_1$ oder $M_1R_2$ oder $M_1R_2$ bzw. $R_1$, $R_2$, $R_3$, $R_4$, wie in Formel (I) durch die unterbrochenen Linien angedeutet wird, 5- oder 6-gliedrige Ringe ausbilden, handelt es sich vorzugsweise um Triazol-, Imidazol- oder Benzimidazol-, Pyrimidin- oder Chinazolin-Ringsysteme.

Bevorzugte Pigmentpräparationen sind dadurch gekennzeichnet, dass der Metallkomplex, der wenigstens eine andere Verbindung eingelagert enthält, 30 bis 2 000 ppm, insbesondere 30 bis 350 ppm, besonders bevorzugt 50 bis 350 ppm Fe, bezogen auf die Summe von Metallkomplex und eingelagerter Verbindung enthält.

Ebenfalls bevorzugt sind solche Pigmentpräparationen, die dadurch gekennzeichnet sind, dass sie wenigstens zwei Metallkomplexe einer Azo-Verbindung enthalten, die in Form ihrer tautomeren Struktur der Formel (I) entspricht, die jeweils wenigstens eine andere Verbindung eingelagert enthält, wobei das Metall des einen Metallkomplexes Fe ist und der Fe-Anteil, bezogen auf die Summe von Metallkomplexen und eingelagerten Verbindungen, wenigsten 30 ppm beträgt.

Bevorzugt sind die eingelagerten Verbindungen für beide Metallkomplexe gleich.

Als Metallkomplexe, worunter auch -Salze verstanden werden, der Formeln (I) bis (V) kommen vorzugsweise die Salze und Komplexe der Mono-, Di-, Tri- und Tetraanionen mit den Metallen Li, Na, K, Mg, Ca, Ba, Fe, Co, Ni, Zn, Cu, Mn, Al, La und Cr, besonders bevorzugt Na, K, Ca, Ba, Ni, Zn, Cu, Mn und La in Betracht.

Besonders bevorzugt sind Salze und Komplexe der Formeln (I) bis (V) mit zwei- oder dreiwertigen Metallen, ganz besonders die Nickelsalze und -komplexe.

Die Metallkomplexe, die wenigstens eine andere Verbindung, insbesondere eine organische Verbindung, eingelagert enthalten, können als Einlagerungsverbindungen, Interkalationsverbindungen sowie als feste Lösungen vorliegen.

Ganz besonders bevorzugt handelt es sich um Einschlussverbindungen, Interkalationsverbindungen und feste Lösungen, bei denen der Azobarbitursäure-Nickel-1:1-Komplex einer der tautomeren Formen der Formel

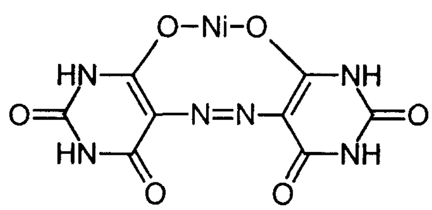

(VI)

entspricht und mindestens eine andere Verbindung eingeschlossen enthält.

Im allgemeinen bildet der Metallkomplex ein schichtförmiges Kristallgitter, bei dem die Bindung innerhalb einer Schicht im wesentlichen über Wasserstoffbrücken und/oder Metallionen erfolgt. Vorzugsweise handelt es sich dabei um Metallkomplexe, die ein Kristallgitter ausbilden, das aus im wesentlichen ebenen Schichten besteht.

Als Metallkomplexe kommen auch solche in Frage, bei denen eine metallhaltige Verbindung, z.B. ein Salz oder Metallkomplex in das Kristallgitter des Nickelkomplexes eingebaut ist. In diesem Fall kann in Formel (VI) bspw. ein Teil des Nickels durch andere Metallionen ersetzt sein oder es können weitere Metallionen in eine mehr oder weniger starke Wechselwirkung mit dem Nickelkomplex treten.

Eingeschlossen sein können sowohl organische als auch anorganische Verbindungen. Verbindungen, die eingeschlossen sein können, entstammen den verschiedenartigsten Verbindungsklassen. Aus rein praktischen Gründen sind solche Verbindungen bevorzugt, die unter Normalbedingungen (25°C, 1 bar) flüssig oder fest sind.

Von den flüssigen Substanzen sind wiederum solche bevorzugt, die einen Siedepunkt von 100°C oder darüber, bevorzugt von größer gleich 150°C bei 1 bar, aufweisen. Geeignete Verbindungen sind vorzugsweise acyclische

und cyclische organische Verbindungen, z.B. aliphatische und aromatische Kohlenwasserstoffe, die substituiert sein können, z.B. durch OH, COOH, $NH_2$, substituiertes $NH_2$, $CONH_2$, substituiertes $CONH_2$, $SO_2NH_2$, substituiertes $SO_2NH_2$, $SO_3H$, Halogen, $NO_2$, CN, -$SO_2$-Alkyl, -$SO_2$-Aryl, -O-Alkyl, -O-Aryl, -O-Acyl.

Im einzelnen seien z.B. genannt: Paraffine und Paraffinöle; Triisobutylen, Tetraisobutylen, Mischungen von aliphatischen und aromatischen Kohlenwasserstoffen, wie sie z.B. bei der Erdölfraktionierung anfallen; chlorierte Paraffinkohlenwasserstoffe wie Dodecylchlorid oder Stearylchlorid; $C_{10}$-$C_{30}$-Alkohole wie 1-Decanol, 1-Dodecanol, 1-Hexadecanol, 1-Octadecanol und ihre Mischungen, Oleinalkohol, 1,12-Octadecandiol, Fettsäuren und ihre Salze und Mischungen, z.B. Ameisensäure, Essigsäure, Dodecansäure, Hexadecansäure, Octadecansäure, Ölsäure, Fettsäureester, z.B. die Methylester der $C_{10}$-$C_{20}$-Fettsäuren, Fettsäureamide, wie Stearinsäureamid, Stearinsäuremonoethanolamid, Stearinsäurediethanolamid, Stearinsäurenitril, Fettamine, z.B. Dodecylamin, Cetylamin, Hexadecylamin, Octadecylamin und andere; Salze von Fettaminen mit Sulfon- und Carbonsäuren, isocyclische Kohlenwasserstoffe wie Cyclododecan, Decahydronaphthalin, o-, m-, p-Xylol, Mesitylen, Dodecylbenzolgemisch, Tetralin, Naphthalin, 1-Methylnaphthalin, 2-Methylnaphthalin, Biphenyl, Diphenylmethan, Acenaphthen, Fluoren, Anthracen, Phenanthren, m-, p-Terphenyl, o-, p-Dichlorbenzol, Nitrobenzol, 1-Chlomaphthalin, 2-Chlomaphthalin, 1-Nitronaphthalin, isocyclische Alkohole und Phenole und ihre Abkömmlinge wie Benzylalkohol, Decahydro-2-naphthol, Diphenylether, Sulfone, z.B. Diphenylsulfon, Methylphenylsulfon, 4,4'-Bis-2-(hydroxyethoxy)-diphenylsulfon; isocyclische Carbonsäuren und ihre Derivate wie Benzoesäure, 3-Nitrobenzoesäure, Zimtsäure, 1-Naphthalincarbonsäure, Phthalsäure, Phthalsäuredibutylester, Phthalsäuredioctylester, Tetrachlorphthalsäure, 2-Nitrobenzamid, 3-Nitrobenzamid, 4-Nitrobenzamid, 4-Chlorbenzamid, Sulfonsäuren, wie 2,5-Dichlorbenzolsulfonsäure, 3-Nitro-, 4-Nitro-benzolsulfonsäure, 2,4-Dimethylbenzolsulfonsäure, 1- und 2-Naphthalinsulfonsäure, 5-Nitro-1- und 5-Nitro-2-naphthalinsulfonsäure, Di-sec.-butyl-naphthalinsulfonsäuregemisch, Biphenyl-4-sulfonsäure, 1,4-, 1,5-, 2,6-, 2,7-Naphthalindisulfonsäure, 3-Nitro-1,5-naphthalindisulfonsäure, Anthrachinonsulfonsäure-1, Anthrachinonsulfonsäure-2, Diphenyl-4,4'-disulfonsäure, 1,3,6-Naphthalintrisulfonsäure und die Salze dieser Sulfonsäuren z.B. die Natrium-, Kalium-, Calcium-, Zink-, Nickel- und Kupfersalze; Sulfonamide wie Benzolsulfonamid, 2-, 3-und 4-Nitrobenzolsulfonamid, 2-, 3- und 4-Chlorbenzolsulfonamid, 4-Methoxy-benzolsulfonamid, 3,3'-Sulfonylbisbenzolsulfonamid, 4,4'-Oxybisbenzolsulfonsäureamid, 1- und 2-Naphthalinsulfonsäureamid.

Carbonsäure- und Sulfonsäureamide sind eine bevorzugte Gruppe von einzuschließenden Verbindungen, insbesondere geeignet sind auch Harnstoff und substituierte Harnstoffe wie Phenylharnstoff, Dodecylharnstoff und andere sowie deren Polykondensate mit Aldehyden, insbesondere Formaldehyd; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Bevorzugte Metallkomplexe enthalten eingeschlossen grenzflächenaktive Verbindungen, insbesondere Tenside, die z.B. aus K. Lindner, Tenside-Textilhilfsmittel-Waschrohstoffe, 2. Auflage, Band I, Wissenschaftliche Verlagsgesellschaft mbH, Stuttgart, 1964, bekannt sind. Dabei kann es sich um anionenaktive, nichtionogene oder kationenaktive Verbindungen oder um Ampholyte handeln. Geeignete anionenaktive Verbindungen sind z.B.: Echte Seifen, Salze der Aminocarbonsäuren, Salze niederer bzw. höherer acylierter Aminocarbonsäuren, Fettsäuresulfate, Sulfate von Fettsäureestern, -amiden usw., primäre Alkylsulfate, Sulfate von Oxoalkoholen, sekundäre Alkylsulfate, Sulfate veresterter oder veretherter Polyoxyverbindungen, Sulfate substituierter Polyglykolether (sulfatierte Ethylenoxidaddukte), Sulfate acylierter oder alkylierter Alkanolamine, Sulfonate von Fettsäuren, ihren Estern, Amiden usw., primäre Alkylsulfonate, sekundäre Alkylsulfonate, Alkylsulfonate mit esterartig gebundenen Acylen, Alkyl- bzw. Alkylphenylethersulfonate, Sulfonate von Polycarbonsäureestern, Alkylbenzolsulfonate, Alkylnaphthalinsulfonate, fettaromatische Sulfonate, Alkylbenzimidazolsulfonate, Phosphate, Polyphosphate, Phosphonate, Phosphinate, Thiosulfate, Hydrosulfite, Sulfinate, Persulfate. Geeignete nichtionogene Verbindungen sind z.B.: Ester und Ether von Polyalkoholen, Alkylpolyglykolether, Acylpolyglykolether, Alkylarylpolyglykolether, acylierte bzw. alkylierte Alkanolaminpolyglykolether. Geeignete kationenaktive Verbindungen sind z.B.: Alkylaminsalze, quaternäre Ammoniumsalze, Alkylpyridiniumsalze, einfache und quaternäre Imidazolinsalze, Alkyldiamine bzw. Alkylpolyamine, Acyldiamine bzw. Acylpolyamine, Acylalkanolamine, Alkanolaminester, Alkyl-$OCH_2$-N-pyridiniumsalze, Alkyl-CO-NH-$CH_2$-N-pyridiniumsalze, Alkylethylenharnstoffe, Sulfoniumverbindungen, Phosphoniumverbindungen, Arseniumverbindungen, Alkylguanidine, Acylbiguanidide. Geeignete Ampholyte sind z.B.: Alkylbetaine, Sulfobetaine und Aminocarbonsäuren. Bevorzugt eingesetzt werden nichtionogene Tenside, insbesondere die Ethylenoxidadditionsprodukte von Fettalkoholen, Fettaminen sowie von Octyl- oder Nonylphenol.

Eine weitere wichtige Gruppe von eingelagerten Verbindungen sind natürliche Harze und Harzsäuren wie z. B. Abietinsäure und ihre Umwandlungsprodukte und Salze. Solche Umwandlungsprodukte sind z.B. hydrierte, dehydrierte und disproportionierte Abietinsäuren. Diese können weiterhin dimerisiert, polymerisiert oder durch Addition von Maleinsäureanhydrid und Fumarsäure modifiziert sein. Von Interesse sind auch die an der Carboxylgruppe modifizierten Harzsäuren wie z.B. die Methyl-, Hydroxyethyl-, Glykol-, Glycerin- und Pentaerythritester, sowie Harzsäurenitrile und Harzsäureamine sowie Dehydroabietylalkohol.

Ebenfalls für eine Einlagerung geeignet sind Polymere, vorzugsweise wasserlösliche Polymere, z.B. Ethylenpropylenoxid-Blockpolymere, vorzugsweise mit einem $M_n$ größer gleich 1.000, insbesondere von 1.000 bis 10.000 g/mol, Polyvinylalkohol, Poly-(meth)-acrylsäuren, modifizierte Cellulose, wie Carboxymethylcellulosen, Hydroxyethyl- und -propylcellulosen, Methyl- und Ethylhydroxyethylcellulosen.
Ebenfalls für die Einlagerung geeignet sind Kondensationsprodukte auf Basis von

A) sulfonierten Aromaten,

B) Aldehyden und/oder Ketonen und gegebenenfalls

C) einer oder mehrerer Verbindungen, ausgewählt aus der Gruppe der nicht sulfonierten Aromaten, Harnstoff und Harnstoffderivaten.

Auf Basis von bedeutet, dass das Kondensationsprodukt gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.
Als sulfonierte Aromaten der Komponente A) werden im Rahmen dieser Anmeldung auch sulfomethylierte Aromaten verstanden. Bevorzugte sulfonierte Aromaten sind: Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl oder Benzolsulfonsäuren.
Als Aldehyde und/oder Ketone der Komponente B) kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.
Als nicht sulfonierte Aromaten der Komponente C) kommen beispielsweise Phenol, Kresol, 4,4'-Dihydroxydiphenylsulfon oder Dihydroxydiphenylmethan in Frage.
Als Harnstoffderivate können beispielsweise Dimethylolharnstoff, Alkylharnstoffe, Melamin oder Guanidin genannt werden.
Als bevorzugte Kondensationsprodukt wird eines auf Basis von

A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,

B) Formaldehyd und gegebenenfalls

C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolhamstoff, Melamin und Guanidin

eingesetzt.
Bevorzugte Kondensationsprodukte sind solche auf Basis von 4,4'-Dihydroxydiphenylsulfon, sulfonierter Ditolylether und Formaldehyd; 4,4'-Dihydroxydiphenylsulfon, Phenolsulfonsäure und Formaldehyd; 4,4'-Dihydroxydiphenylsulfon, Natriumbisulfit, Formaldehyd und Harnstoff; Naphthalinsulfonsäure, 4,4'-Dihydroxydiphenylsulfon und Formaldehyd; sulfoniertes Terphenyl und Formaldehyd; und/oder sulfoniertes 2-Hydroxybiphenyl und Formaldehyd sowie Naphthalinsulfonsäure und Formaldehyd.
Besonders bevorzugt werden als eingelagerte Verbindungen Melamin oder Melaminderivate, insbesondere solche der Formel (VII)

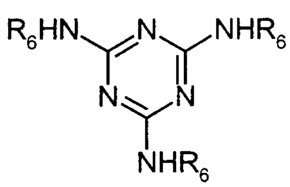

(VII)

eingesetzt, worin

$R_6$ für Wasserstoff oder $C_1$-$C_4$-Alkyl, das gegebenenfalls mit OH-Gruppen substituiert ist, steht,

ganz besonders bevorzugt, worin

$R_6$ für Wasserstoff steht.

Die Menge an Substanz, die in das Kristallgitter der Metallverbindungen eingelagert werden kann, liegt in der Regel bei 5 % bis 200 Gew.-%, insbesondere 5 bis 120 Gew.-%, bezogen auf die Menge an Wirtsverbindung. Bevorzugt eingelagert werden 10 bis 100 Gew.-%. Es handelt sich hierbei um die Menge an Substanz, die durch geeignete Lösungsmittel nicht auswaschbar ist und die sich aus der Elementaranalyse ergibt. Naturgemäß kann auch mehr oder weniger als die genante Menge an Substanz zugesetzt werden, wobei man gegebenenfalls darauf verzichten kann, einen Überschuss auszuwaschen. Bevorzugt sind Mengen von 10 bis 150 Gew.-%.

Das in der erfindungsgemäßen Präparation enthaltende Pigment besitzt vorzugsweise eine Oberfläche ($m^2$/g) von ≥150, insbesondere 150 bis 250 $m^2$/g.

Die erfindungsgemäßen Präparationen können weitere Zusätze enthalten. Als bevorzugte Zusätze sind organische oder anorganische Basen zu nennen.

Als Basen sind zu nennen: Alkalihydroxide, wie beispielsweise NaOH, KOH oder organische Amine wie Alkylamine, insbesondere Alkanolamine oder Alkylalkanolamine.

Als besonders bevorzugt sind zu nennen Methylamin, Dimethylamin, Trimethylamin, Ethanolamin, n- Propanolamin, n-Butanolamin, Diethanolamin, Triethanolamin, Methylethanolamin oder Dimethylethanolamin.

Weitere Zusätze sind beispielsweise Dispergiermittel, Carbonsäure- und Sulfonsäureamide sowie für Pigmentpräparation übliche Zusätze.

Unter Dispergiermittel im Rahmen dieser Anmeldung wird eine die Pigmentteilchen in ihrer feinen partikulären Form in wässrigen Medien stabilisierende Substanz verstanden. Unter fein partikulär wird vorzugsweise eine Feinverteilung von 0,001 bis 5 µm verstanden, insbesondere von 0,005 bis 1 µm, besonders bevorzugt von 0,005 bis 0,5 µm.

Geeignete Dispergiermittel sind beispielsweise anionisch, kationisch, amphoter oder nichtionogen.

Geeignete anionische Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit. Geeignet sind außerdem Dispergiermittel aus der Gruppe der Sulfobemsteinsäureester sowie Alkylbenzolsulfonate. Außerdem sulfatierte, alkoxylierte Fettsäurealkohole oder deren Salze. Als alkoxylierte Fettsäurealkohole werden insbesondere solche mit 5 bis 120, vorzugsweise 5 bis 60, insbesondere mit 5 bis 30 Ethylenoxid versehene $C_6$-$C_{22}$-Fettsäurealkohole, die gesättigt oder ungesättigt sind, insbesondere Stearylalkohol, verstanden. Besonders bevorzugt ist ein mit 8 bis 10 Ethylenoxideinheiten alkoxylierter Stearylalkohol. Die sulfatierten alkoxylierten Fettsäurealkohole liegen vorzugsweise als Salze, insbesonders als Alkali- oder Aminsalze, vorzugsweise als Diethylaminsalz vor. Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 000 und 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als nichtionische Dispergiermittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren. Hierbei handelt es sich z.B. um Ethylenoxidaddukte aus der Klasse der Umsetzungsprodukte von Ethylenoxid mit:

a1) gesättigten und/oder ungesättigten Fettalkoholen mit 6 bis 22 C-Atomen oder

b1) Alkylphenolen mit 4 bis 12 C-Atomen im Alkylrest oder

c1) gesättigten und/oder ungesättigten Fettaminen mit 14 bis 20 C-Atomen oder

d1) gesättigten und/oder ungesättigten Fettsäuren mit 14 bis 20 C-Atomen oder

e1) hydrierte und/oder unhydrierte Harzsäuren.

Als Ethylenoxid-Addukte kommen insbesondere die unter a1) bis e1) genannten alkylierbaren Verbindungen mit 5 bis 120, insbesondere 5 bis 100, insbesondere 5 bis 60, besonders bevorzugt 5 bis 30 Mol Ethylenoxid in Frage.
Als Dispergiermittel eignen sich ebenfalls die aus den prioritätsälteren DE-A 19 712 486 oder aus DE-A 19 535 246 bekannten Ester des Alkoxylierungsproduktes der Formel (X), die der Formel (XI) entsprechen sowie diese gegebenenfalls in Mischung mit den zugrundeliegenden Verbindungen der Formel (X). Das Alkoxylierungsprodukt eines Styrol-Phenol-Kondensats der Formel (X) ist wie nachfolgend definiert:

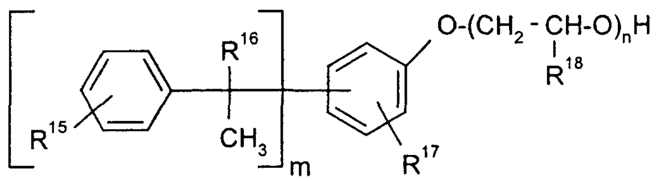

(X),

in der

$R^{15}$ Wasserstoff oder $C_1$-$C_4$-Alkyl bedeutet,

$R^{16}$ für Wasserstoff oder $CH_3$ steht,

$R^{17}$ Wasserstoff, $C_1$-$C_4$-Alkyl, $C_1$-$C_4$-Alkoxy, $C_1$-$C_4$-Alkoxycarbonyl oder Phenyl bedeutet,

m eine Zahl von 1 bis 4 bedeutet,

n eine Zahl von 6 bis 120 bedeutet,

$R^{18}$ für jede durch n indizierte Einheit gleich oder verschieden ist und für Wasserstoff, $CH_3$ oder Phenyl steht, wobei im Falle der Mitanwesenheit von $CH_3$ in den verschiedenen -(-$CH_2$-CH($R^{18}$)-O-)-Gruppen in 0 bis 60 % des Gesamtwertes von n $R^{18}$ für $CH_3$ und in 100 bis 40 % des Gesamtwertes von n $R^{18}$ für Wasserstoff steht und wobei im Falle der Mitanwesenheit von Phenyl in den verschiedenen -(-$CH_2$-CH($R^{18}$)-O-)-Gruppen in 0 bis 40 % des Gesamtwertes von n $R^{18}$ für Phenyl und in 100 bis 60 % des Gesamtwertes von n $R^{18}$ für Wasserstoff steht.

Die Ester der Alkoxylierungsprodukte (X) entsprechen der Formel (XI)

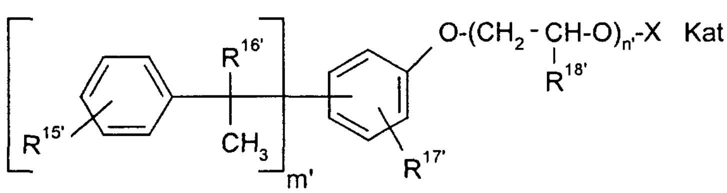

(XI),

in der

$R^{15'}$, $R^{16'}$, $R^{17'}$, $R^{18'}$, m' und n' den Bedeutungsumfang von $R^{15}$, $R^{16}$, $R^{17}$, $R^{18}$, m bzw. n, jedoch unabhängig hiervon, annehmen,

X die Gruppe -$SO_3$, -$SO_2$, -$PO_3$ oder -CO-($R^{19}$)-COO bedeutet,

Kat ein Kation aus der Gruppe von H, Li, Na, K , $NH_4$ oder HO-$CH_2CH_2$-$NH_3$ ist, wobei im Falle von X = -$PO_3$ zwei Kat vorliegen und

$R^{19}$ für einen zweiwertigen aliphatischen oder aromatischen Rest steht, vorzugsweise für $C_1$-$C_4$-Alkylen, insbesondere Ethylen, $C_2$-$C_4$- einfach ungesättigte Reste, insbesondere Acetylen oder gegebenenfalls substituiertes Phenylen, insbesondere ortho-Phenylen steht, wobei als mögliche Substituenten vorzugsweise $C_1$-$C_4$-Alkyl, $C_1$-$C_4$-Alkoxy, $C_1$-$C_4$-Alkoxycarbonyl oder Phenyl in Frage kommen.

Spezielle Einzelverbindungen der Formel (XI) sind beispielsweise aus DE-A 19 712 486 und Gemische der Formeln (X) und (XI) sind beispielsweise DE-A-19 535 256 bekannt, die jeweils Bestandteile dieser Anmeldung sind.

Als ein bevorzugtes Dispergiermittel wird die Verbindung der Formel (XI) eingesetzt. Vorzugsweise eine Verbindung der Formel (XI), worin X einen Rest der Formel -CO-($R^{19}$)-COO- bedeutet und $R^{19}$ die obige Bedeutung besitzt.

Bevorzugt ist ebenfalls als Dispergiermittel eine Verbindung der Formel (XI) zusammen mit einer Verbindung der Formel (X) einzusetzen. Vorzugsweise enthält das Dispergiermittel in diesem Fall 5 bis 99 Gew.-% der Verbindung (XI) und 1 bis 95 Gew.-% der Verbindung (X).

Als polymere Dispergiermittel kommen beispielsweise wasserlösliche sowie wasseremulgierbare Typen in Frage, z.B. Homo- sowie Co-Polymerisate, wie statistische- oder Block-Copolymerisate.

Besonders bevorzugte Dispergiermittel sind polymere Dispergiermittel wie beispielsweise AB-, BAB- und ABC-Blockcopolymere. In den AB- oder BAB-Blockcopolymeren ist das A-Segment ein hydrophobes Homopolymer oder Copolymer, das eine Verbindung zum Pigment sicherstellt und der B-Block ein hydrophiles Homopolymer oder Copolymer oder ein Salz davon und stellt das Dispergieren des Pigmentes im wässrigen Medium sicher. Derartige polymere Dispergiermittel und deren Synthese sind beispielsweise aus EP-A 518 225 sowie EP-A 556 649 bekannt.

Das Dispergiermittel wird vorzugsweise in einer Menge von 0,1 bis 100 Gew.-%, insbesondere 0,5 bis 60 Gew.-%, bezogen auf das eingesetzte Pigment in der Pigmentpräparation, verwendet.

Als Carbonsäure- und Sulfonsäureamide sind beispielsweise geeignet, Harnstoff und substituierte Harnstoffe wie Phenylharnstoff, Dodecylharnstoff und andere; Heterocyclen wie Barbitursäure, Benzimidazolon, Benzimidazolon-5-sulfonsäure, 2,3Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Die erfindungsgemäße Präparation enthält vorzugsweise 80 bis 100 Gew.-%, insbesondere 90 bis 99,9 Gew.-% obigen Pigmentes.

In einer besonders bevorzugten Ausführungsform enthalten die erfindungsgemäßen Pigmentpräparationen 30 bis 99,9 Gew.-% wenigstens eines des obigen Pigmentes und 0 bis 50 Gew.-% eines Dispergiermittels, jeweils bezogen auf die Präparation.

Selbstverständlich kann die Präparation noch weitere Zusätze enthalten. So können beispielsweise die als die Viskosität einer wässrigen Suspension erniedrigenden und den Feststoffgehalt erhöhenden Zusätze wie die obengenannten Carbonsäure- und Sulfonsäureamide in einer Menge von bis zu 10 Gew.-%, bezogen auf die Präparation zugesetzt werden.

Besonders bevorzugt enthält die erfindungsgemäße Präparation aber mehr als 90 insbesondere mehr als 95, vorzugsweise mehr als 97 Gew.-% an Pigment und Dispergiermittel.

Die Erfindung betrifft weiterhin ein Verfahren zur Herstellung der erfindungsgemäßen Pigmentpräparation, wobei die Azoverbindungen der Formel (I) mit einem von Eisen verschiedenen Metallsalz in Gegenwart eines Eisensalzes komplexiert werden und der entstandene Metallkomplex mit der einzulagernden Verbindung umgesetzt wird, dadurch gekennzeichnet, dass der Gehalt an Eisen, bezogen auf die Summe von Metallkomplex und eingelagerten Verbindung (also Pigment), wenigstens 30 ppm beträgt.

Ein bevorzugtes Verfahren ist dadurch gekennzeichnet, dass die Azoverbindung der Formel (I), vorzugsweise als Alkalisalz wie Na-, Li- oder K-Salz, mit einem Metallsalz von Metallen ausgewählt aus der Gruppe Li, Na, K, Mg, Ca, Ba, Fe, Co, Ni, Zn, Cu, Mn, Al, La und Cr, besonders bevorzugt Na, K, Ca, Ba, Ni, Zn, Cu, Mn und La in Gegenwart eines Eisensalzes umgesetzt wird, vorzugsweise bei $pH < 7$, und der entstandene Metallkomplex mit der einzulagernden Verbindung umgesetzt wird, vorzugsweise bei einem pH von 1 bis 7. Eine bevorzugte Ausführungsform des erfindungsgemäßen Verfahrens ist dadurch gekennzeichnet, dass im Anschluss an die Einlagerung der pH auf größer gleich 4,5 vorzugsweise auf 4,5 bis 7 angehoben wird, sofern die Einlagerung selbst bei einem pH von kleiner 4,5 erfolgte.

Als Metallsalz kommen vorzugsweise wasserlösliche Metallsalze der oben genannten Metalle in Frage, insbesondere Chloride, Bromide, Acetate, Nitrate usw. Bevorzugt eingesetzte Metallsalze besitzen eine Wasserlöslichkeit von mehr als 20 g/l, insbesondere mehr als 50 g/l bei 20°C.

Geeignete Metallsalze zur Herstellung der Salze und Komplexe der Azoverbindungen sind beispielsweise: Magnesiumchlorid, Magnesiumsulfat, Calciumchlorid, Calciumacetat, Calciumformiat, Bariumchlorid, Bariumnitrat, Bariumacetat, Bariumcarbonat, Strontiumnitrat, Manganchlorid, Mangansulfat, Cobaltchlorid, Cobaltnitrat, Cobaltsulfat, Nickelformiat, Nickelnitrat, Nickelsulfat, Nickelchlorid, Nickelacetat, Aluminiumsulfat, Aluminiumnitrat, Chrom-(III)-sulfat, Chrom-(III)-nitrat, Zinkchlorid, Zinksulfat, Zinkacetat, Cadmiumchlorid, Cadmiumsulfat, Cadmiumnitrat, Kupfer-(II)-sulfat, Kupfer-(II)-chlorid, Kupfer-(II)-acetat und Kupfer-(II)-formiat, Lanthannitrat und Aluminiumchloridhydrat.

Man kann auch Mischungen dieser Salze, die verschiedene der genannten Metalle enthalten können, verwenden. Die Verwendung von solchen Salzmischungen empfiehlt sich insbesondere für die Erzielung von Zwischentönen der farbigen Endprodukte.

Als bevorzugte Eisensalze kommen in Frage: Eisen-(II)-chlorid, Eisen-(II)-sulfat sowie Eisen(III)chlorid.

Die auf diese Weise erhaltenen Pigmente können dann durch Filtration ihrer wässrigen Suspension als wässriger Presskuchen isoliert werden. Dieser Presskuchen kann beispielsweise nach Waschen mit heißem Wasser, nach üblichen Trocknungsverfahren getrocknet werden.

Als Trocknungsverfahren kommen beispielsweise die Schaufeltrocknung oder die Sprühtrocknung entsprechend wässriger Slurrys in Frage.

Anschließend kann das Pigment nachgemahlen werden.

Sofern die Pigmente für die gewünschte Anwendung zu kornhart bzw. zu dispergierhart sind, können sie beispielsweise gemäß der in DE-A 19 847 586 beschriebenen Methode in komweiche Pigmente umgewandelt werden.

Im Rahmen dieser Anmeldung werden die Metallkomplexe einer Azoverbindung der Formel (I), die wenigstens eine Verbindung eingelagert enthalten, als Pigmente bezeichnet. Die Erfindung betrifft daher auch Pigmentpräparationen, enthaltend wenigstens ein erfindungsgemäßes Pigment und ein Dispergiermittel.

Bevorzugt handelt es sich bei den Pigmentpräparationen um feste Präparationen, die vorzugsweise als Pulver oder Granulate vorliegen.

Die erfindungsgemäßen Pigmente zeichnen sich durch besonders gute Dispergierbarkeit und eine hohe Farbstärke aus. Darüberhinaus sind sie sehr feinteilig.

Die festen Pigmentpräparationen eignen sich hervorragend für alle Pigmentanwendungszwecke.

Zum Beispiel eignen sie sich zum Pigmentieren von Lacken aller Art für die Herstellung von Druckfarben, Leimfarben oder Binderfarben, für die Massefärbung von synthetischen, halbsynthetischen oder natürlichen makromolekularen Stoffen, wie z.B. Polyvinylchlorid, Polystyrol, Polyamid, Polyethylen oder Polypropylen. Sie können auch für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier verwendet werden. Aus diesen Pigmenten können feinteilige, stabile, wässrige Pigmentierungen von Dispersions- und Anstrichfarben, die für die Papierfärbung, für den Pigmentdruck von Textilien, für den Laminatdruck oder für die Spinnfärbung von Viskose brauchbar sind, durch Mahlen oder Kneten in Gegenwart von nichtionogenen, anionischen oder kationischen Tensiden hergestellt werden.

## Beispiele

### Beispiele 1-6

5 kg einer Suspension des Kaliumsalzes der Azobarbitursäure (12,5 Gew.-%) werden mit 1 970 g einer Lösung von $NiCl_2 \cdot 6\ H_2O$ versetzt (Gehalt = 24,9 Gew.-%). Die Lösung des Eisensalzes wird dann hinzugegeben

504 g Melamin werden eingerührt und mit deionisiertem Wasser auf 10 1 aufgefüllt. Unter starkem Rühren wird die Suspension auf 98°C erhitzt und 4 Stunden bei dieser Temperatur gehalten.

Anschließend wird der pH auf 5 mit KOH-Lösung (5 %) gestellt, abgenutscht, gewaschen, im Vakuum getrocknet und in einer Labormühle gemahlen. Das so erhaltene Pigmentpulver wird nach DIN 53 238, Teil 31, in einem Melamin-Alkyd Weißlackaufstrich eingesetzt und farbmetrisch vermessen.

| Bsp.-Nr. | ppm Fe / Zusatz | | Oberfläche ($m^2$/g) | Farbstärke |
|---|---|---|---|---|
| 1 | 0 | | 106 | 100% |
| 2 | 25 | 0,145g $FeSO_4 \cdot 7\ H_2O$ | 140 | 114% |
| 3 | 50 | 0,29 g $FeSO_4 \cdot 7\ H_2O$ | 153 | 118 % |
| 4 | 75 | 0,435 g $FeSO_4 \cdot 7\ H_2O$ | 138 | 120 % |
| 5 | 100 | 0,58 g $FeSO_4 \cdot 7\ H_2O$ | 170 | 135 % |
| 6 | 1000 | 5,8 g $FeSO_4 \cdot 7\ H_2O$ | 145 | 116 % |

### Beispiel 7

0,07 mol Presskuchen (11,4 %)Kaliumsalz der Cyaniminoazobarbitursäure werden in 800 ml Wasser angeschlämmt, mit 0,1 mol $BaCl_2 \cdot 2\ H_2O$ und 250 mg $FeCl_2 \cdot 4H_2O$ versetzt und anschließend 3 Stunden bei 95°C bei pH = 5,0 gerührt.

Nun setzt man 0,2 mol Melamin bei pH = 2,5 zu und rührt 2 Stunden bei gleicher Temperatur nach.

Mit 20 % Kaliumacetatlösung wird auf pH = 4,8 eingestellt, abgesaugt, mit destilliertem Wasser gewaschen und getrocknet. Das Produkt wird nach DIN 53 238, Teil 31, in einem Weißlack eines Alkyd-Melamin-Systems dispergiert.

Die spezifische Oberfläche beträgt 60 $m^2/g$. Die Farbstärke beträgt 120 %, bez. auf Referenz (d.h. 0 % Fe-Zugabe).

Die ohne Eisenzusatz hergestellte Referenzprobe hat eine spezifische Oberfläche von lediglich 40 $m^2/g$.

## Beispiel 8

Das wie in Beispiel 1 erhaltene Pigment wird folgendermaßen belegt:

8,3 kg feuchter Presskuchen (23 % Trockengehalt) wurden in 29 kg Wasser homogen angeschlagen, auf ca. 95°C aufgeheizt, danach auf pH 6,1 eingestellt und ca. 30 Minuten nachgerührt.

Anschließend wurden 12,0 kg einer ca. 95°C heißen, mittels Salzsäure auf pH 6,4 eingestellten wässrigen Emulsion, die 4,9 Gew.-% Stearinsäure und 2,9 Gew.-% eines anionischen oberflächenaktiven Mittels auf Basis eines ethoxylierten, sulfatierten Fettalkohols enthielt, zugesetzt und 180 Minuten bei 95°C nachgerührt.

Die so erhaltene Suspension wurde mit Wasser auf 88 1 aufgefüllt, abgesaugt und mit ca. 70°C heißem Wasser so lange gewaschen, bis eine Leitfähigkeit von weniger als 200 µSi/cm erreicht wurde.

Man erhielt einen wasserfeuchten Pigment-Presskuchen mit einem Trockengehalt von 40,5 Gew.-%. Dieser Presskuchen wurde bei 70°C auf eine Restfeuchte von weniger als 1 Gew.-% ofengetrocknet und mittels Messermühle zur erfindungsgemäß zu verwendenden festen Pigmentpräparation feingemahlen.

Das belegte Pigmentpulver wird mittels Kaltwalzung im Walzenstuhl in PVC eingearbeitet.

Wird anstelle des Pigments aus Beispiel 1 das aus Beispiel 4 wie oben belegt (75 ppm Fe), so steigt die Farbstärke auf 110 %.

## Beispiel 9

5 kg Suspension K-Salz der Azobarbitursäure (12,5 Gew.-%), 1970 g 24,9 % $NiCl_2 \cdot 6\ H_2O$-Lösung, 504 g Melamin, 0,58 g $FeSO_4 \cdot 7\ H_2O$ werden gemischt, mit dem Cavitron gemahlen und auf 10 1 mit deionisiertem Wasser aufgefüllt.

Mit einem Massenstrom von 6 kg/h wird das Gemisch durch einen Kontireaktor wie beispielsweise gemäß DE-A-100 135 47 geschickt.

Die Reaktionstemperatur beträgt 115°C und die Verweilzeit 4 Minuten. Die erhaltene Suspension wird mit Kaliumacetatlösung (25 %) auf einen pH von 4,8 eingestellt. Anschließend wird abfiltriert, gewaschen, im Vakuum getrocknet, gemahlen und nach DIN a53 238, Teil 31, in einen Weißlack eingearbeitet.

Die spezifische Oberfläche beträgt 150 $m^2/g$ und es wird eine Farbstärke von 125 % erreicht.

## Patentansprüche

1. Feste Pigmentpräparationen enthaltend als Pigment wenigstens einen Metallkomplex einer Azo-Verbindung, die in Form ihrer tautomeren Strukturen der Formel (I) entspricht

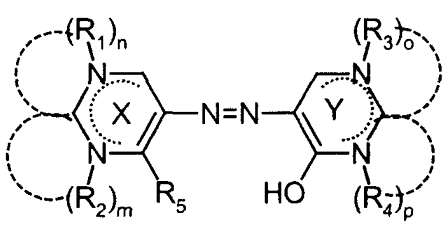

(I),

worin die mit

X und Y bezeichneten Ringe unabhängig voneinander je einen oder zwei Substituenten aus der Reihe =O, =S, $=NR_7$, $-NR_6H_7$, $-OR_6$, $-SR_6$, $-COOR_6$, -CN, $-CONR_6R_7$, $-SO_2R_8$,

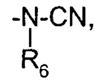

Alkyl, Cycloalkyl, Aryl und Aralkyl tragen können, wobei die Summe der endo- und exocyclischen Doppelbindungen für jeden der Ringe X und Y drei ist,

$R_6$ für Wasserstoff, Alkyl, Cycloalkyl, Aryl oder Aralkyl und

$R_7$ für Wasserstoff, Cyan, Alkyl, Cycloalkyl, Aryl, Aralkyl oder Acyl stehen und

$R_8$ Alkyl, Cycloalkyl, Aryl oder Aralkyl bezeichnet,

$R_1$, $R_2$, $R_3$, $R_4$ unabhängig voneinander für Wasserstoff, Alkyl, Cycloalkyl, Aryl oder Aralkyl stehen und weiterhin, wie in Formel (I) durch die unterbrochenen Linien angedeutet wird, 5- oder 6-gliedrige Ringe ausbilden können, an die weitere Ringe ankondensiert sein können,

$R_5$ -OH, -$NR_6R_7$, Alkyl, Cycloalkyl, Aryl oder Aralkyl bedeutet, wobei die für $R_1$ bis $R_8$ genannten CH-Bindungen enthaltenden Substituenten ihrerseits substituiert sein können und m, n, o, p 1 oder für den Fall, dass von den Ring-Stickstoffatomen Doppelbindungen ausgehen, wie in Formel (I) durch die punktierten Linien angedeutet wird, auch Null bedeuten können,

und der wenigstens eine andere Verbindung eingelagert enthält, **dadurch gekennzeichnet, dass** der Metallkomplex, der wenigstens eine andere Verbindung eingelagert enthält, wenigstens 30 ppm Fe, bezogen auf die Summe von Metallkomplex und eingelagerter Verbindung, enthält.

**2.** Pigmentpräparationen gemäß Anspruch 1, **dadurch gekennzeichnet, dass** der Metallkomplex, der wenigstens eine andere Verbindung eingelagert enthält, 30 bis 2000 ppm Fe, bezogen auf die Summe von Metallkomplex und eingelagerter Verbindung, enthält.

**3.** Pigmentpräparation gemäß Anspruch 1, **dadurch gekennzeichnet, dass** sie wenigstens zwei Metallkomplexe einer Azo-Verbindung, die in Form ihrer tautomeren Struktur der Formel (I) entspricht, die jeweils wenigstens eine andere Verbindung eingelagert enthalten, wobei das Metall des einen Metallkomplexes Fe ist und der Fe-Anteil, bezogen auf die Summe von Metallkomplexen und eingelagerten Verbindungen, wenigstens 30 ppm beträgt.

**4.** Pigmentpräparationen gemäß Anspruch 1, **dadurch gekennzeichnet, dass** in der Verbindung der Formel (I) der mit X **gekennzeichnete** Ring für einen Ring der Formel

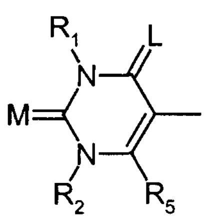 , 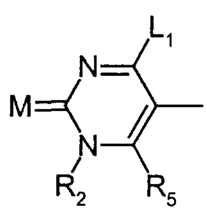 , 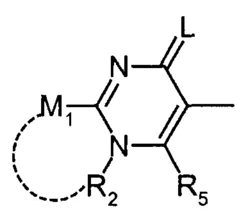

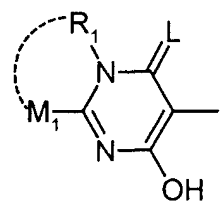

oder

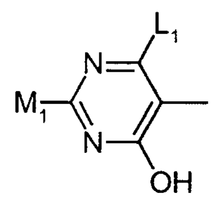

steht,
in denen

L und M unabhängig voneinander für =O, =S oder $=NR_6$ stehen

$L_1$ Wasserstoff, $-OR_6$, $-SR_6$, $-NR_6R_7$, $-COOR_6$, $-CONR_6R_7$, -CN, Alkyl, Cycloalkyl, Aryl oder Aralkyl und

$M_1$ $-OR_6$, $-SR_6$, $-NR_6R_7$, $-COOR_6$, $-CONR_6R_7$, -CN, $-SO_2R_8$,

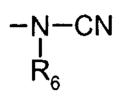,

Alkyl, Cycloalkyl, Aryl oder Aralkyl bezeichnen, wobei die Substituenten $M_1$ und $R_1$ oder $M_1$ und $R_2$ einen 5- oder 6-gliedrigen Ring ausbilden können, und

$R_1$, $R_2$ und $R_5$ die oben angegebenen Bedeutungen besitzen.

**5.** Pigmentpräparation gemäß Anspruch 1, **dadurch gekennzeichnet, dass** die Azoverbindung der Formel (I) in Form ihrer freien Säure der Formel (II) oder (III) oder einer ihrer tautomeren Formeln entspricht

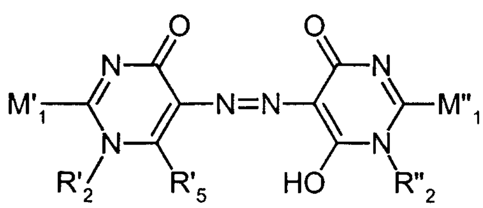

(II)

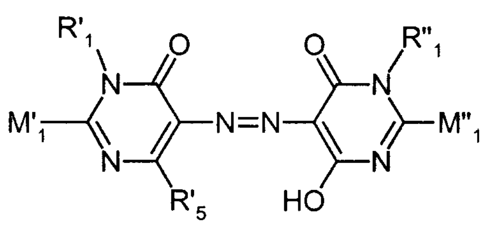

(III),

in denen

$R'_5$ -OH oder $-NH_2$ bezeichnet,

| | |
|---|---|
| $R'_1$, $R''_1$, $R'_2$ und $R''_2$ | jeweils für Wasserstoff steht und |
| $M'_1$ und $M''_1$ | unabhängig voneinander für Wasserstoff, -OH, $-NH_2$, -NHCN, Arylamino oder Acylamino stehen. |

**6.** Pigmentpräparationen gemäß Anspruch 1, **dadurch gekennzeichnet, dass** die Azoverbindung der Formel (I) der Formel (V) oder einer tautomeren Form davon entspricht

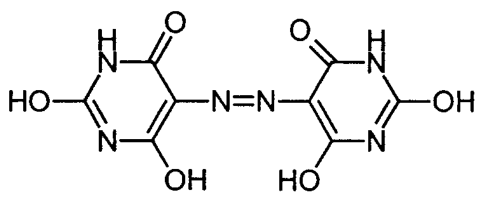

(V).

**7.** Pigmentpräparation gemäß Anspruch 1, **dadurch gekennzeichnet, dass** die Metallkomplexe der Azoverbindung der Formel (I), die wenigstens eine andere Verbindung eingelagert enthalten, den Mono-, Di-, Tri- und Tetraanionen der Azoverbindungen der Formel (I) mit den Metallen ausgewählt aus der Gruppe Li, Na, K, Mg, Ca, Ba, Fe, Co, Ni, Zn, Cu, Mn, Al, La und Cr, insbesondere Na, K, Ca, Ba, Ni, Zn, Cu, Mn und La entsprechen.

**8.** Pigmentpräparationen gemäß Anspruch 1, **dadurch gekennzeichnet, dass** als Metallkomplex das Ni-Salz bzw. -Komplex der Azoverbindung der Formel (I) eingesetzt wird.

**9.** Pigmentpräparationen gemäß Anspruch 1, **dadurch gekennzeichnet, dass** der Metallkomplex eine cyclische oder acyclisch organische Verbindung, insbesondere Melamin eingelagert enthält.

**10.** Verfahren zur Herstellung der Pigmentpräparation gemäß Anspruch 1, wobei die Azoverbindungen der Formel (I) mit einem von Eisen verschiedenen Metallsalz komplexiert wird und der entstandene Metallkomplex mit der einzulagernden Verbindung umgesetzt wird, **dadurch gekennzeichnet, dass** neben dem Metallsalz soviel Eisensalz eingesetzt wird, dass der Gehalt an Eisen, des gebildeten Pigments, bezogen auf die Summe von Metallkomplex und eingelagerter Verbindung, wenigstens 30 ppm beträgt.

**11.** Verwendung der Pigmentpräparationen gemäß Anspruch 1 zur Herstellung von Druckfarben, Leimfarben oder Binderfarben, für die Massefärbung von synthetischen, halbsynthetischen oder natürlichen makromolekularen Stoffen, insbesondere Polyvinylchlorid, Polystyrol, Polyamid, Polyethylen oder Polypropylen, sowie für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier.